# EUROPEAN PATENT SPECIFICATION

(11) **EP 2 895 708 B1**
(45) Date of publication and mention of the grant of the patent: **10.05.2017**
(21) Application number: 12746137.4
(22) Date of filing: 03.08.2012
(51) Int. Cl.: F01K 3/18, F01K 25/08, F22B 1/18, F02G 5/04

(54) **SYSTEM FOR RECOVERING THROUGH AN ORGANIC RANKINE CYCLE (ORC) ENERGY FROM A PLURALITY OF HEAT SOURCES**
SYSTEM ZUR ERHOLUNG DURCH EINEN ORGANISCHEN RANKINE-KREISLAUF MIT ENERGIE AUS MEHREREN WÄRMEQUELLEN
SYSTÈME PERMETTANT DE RÉCUPÉRER, AU MOYEN D'UN CYCLE DE RANKINE ORGANIQUE (ORC), DE L'ÉNERGIE PROVENANT D'UNE PLURALITÉ DE SOURCES DE CHALEUR

(43) Date of publication of application: 22.07.2015
(73) Proprietor: Tri-o-gen Group B.V., 7472 DE Goor (NL)
(72) Inventor: HONKATUKIA, Juha, FIN-53500 Lappeenranta (FI); UUSITALO, Antti Pekka, FIN-53950 Lappeenranta (FI)
(74) Representative: Bartelds, Erik
(86) International application number: PCT/NL2012/050548
(87) International publication number: WO 2014/021708

(56) References cited:
- WO-A1-2004/033859
- WO-A1-2006/060253
- DE-A1-102006 043 835
- US-A- 3 830 062
- US-A1- 2010 071 368
- US-A1- 2010 313 565

## Description

The invention relates to a system for recovering through an Organic Rankine Cycle (ORC) energy from a plurality of heat sources. The invention also relates to a set of evaporators for use in such a system.

In internal combustion engine power plants, like diesel engine or gas engine power plants, the electricity production can be increased by utilizing the waste heat streams of the engine with steam Rankine cycles or Organic Rankine Cycles (ORC). An ORC process is a Rankine process which uses an organic working fluid instead of a water/steam cycle. In a well planned heat recovery system the increase in electricity production can be as high as 15 %, but the practical implementation of such a system is challenging because it involves the utilization of high-temperature waste heat streams, like the waste heat from exhaust gas, as well as the utilization of low-temperature waste heat streams, like the waste heat from charge air and engine cooling water. An energy converter based on Organic Rankine Cycle provides an effective means to utilize low-temperature waste heat in a small scale whereas steam Rankine cycles are normally used in a large scale heat recovery from high-temperature waste heat streams. Utilizing the waste heat streams of different temperature levels often leads to a complicated waste heat recovery system with various working fluids.

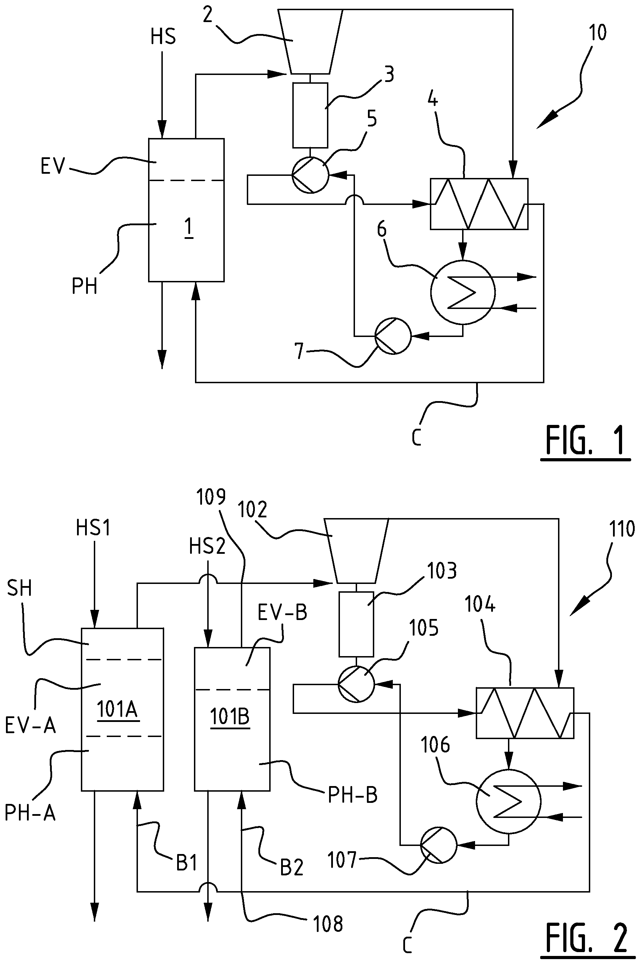

D1 (US 2010/071368-A1) discloses a waste heat recovery system, e.g. for an internal combustion engine which includes two ORCs, a high temperature cycle and a low temperature cycle. In the embodiments of Figs. 1-3 of D1 these two cycles share a common organic working fluid and a common condenser. In the embodiments of Figs. 1 and 2 the two cycles also share a common recuperator. However, each cycle not only has its own vaporizer, but also its dedicated turbine.

D2 (WO 2006/060253-A1) discloses an ORC energy conversion apparatus for generating power from exhaust gases aboard a marine vessel. The apparatus may have two parallel evaporators (Figs. 8-10). The illustrated apparatus has two or three parallel turbo-generators and does not include any preheaters upstream of the evaporators.

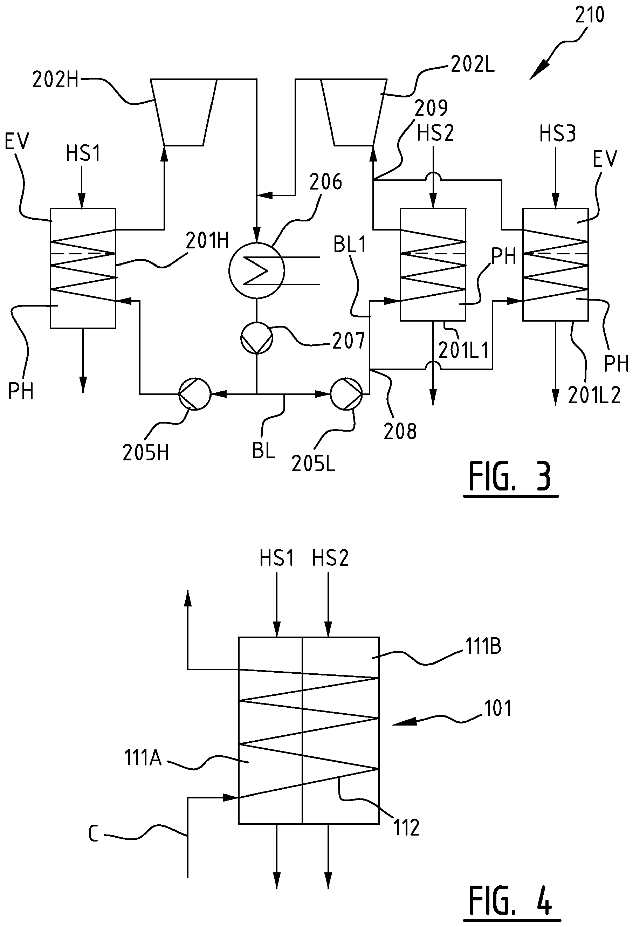

D3 (US 2010/313565-A1) discloses a waste heat recovery system for an internal combustion engine which includes a combination of a high pressure steam cycle and a lower pressure organic Rankine cycle. Each cycle has its own evaporator and turbine. While in Fig. 3 the high pressure cycle has two parallel evaporators (of which only one is connected to turbine), the ORC has only one evaporator.

D4 (US 3.830.062-A) discloses an ORC engine for using heat from the exhaust and cooling system of an internal combustion engine, which is similar to the system shown in Fig. 3 of D1. A high pressure circuit and a low pressure circuit share the organic fluid and a condenser. Each circuit has its own evaporator, recuperator and turbine (although the recuperators and turbines are arranged together in an expander. The ORC engine does not include any preheater.

D5 (DE 102006043835-A1) discloses a system for recovering energy from exhaust gas and coolant from an internal combustion engine. The system includes plurality of heat exchangers in series. In a first heat exchanger a work medium is heated by both exhaust gas and coolant. In further heat exchangers the work medium is heated only by exhaust gas, until it vaporizes. The circuit includes a single turbine and a single condenser. The work medium can be water with anti-freeze, alcohol mixture or refrigerant. The system does not include any preheater.

D6 (WO 2004/033859-A1) discloses a waste heat recovery system for use with an internal combustion engine or a combination of an internal combustion engine and a fuel cell. The system is based on a conventional Rankine cycle (water/steam), and includes a circuit that is filled with water or a coolant (water mixed with anti-freeze). In Figs. 5 and 6 there are multiple evaporators, which are connected to different sources of heat. Vapour from the various evaporators is mixed and then expanded in a turbine. The parallel evaporators are all single stage units and do not include any preheaters.

It is an aim of the present invention to provide an improvement to the above-mentioned problems. In accordance with the invention this aim is achieved by a system according to claim 1. Such a system for recovering energy through an Organic Rankine Cycle (ORC) from a plurality of heat sources, comprises a circuit in which an organic working fluid circulates, the circuit including at least one turbine, at least one condenser, at least one pump and at least two evaporators arranged in parallel, each said evaporator being in heat transferring contact with one of said heat sources.

In the ORC energy recovery system according to the invention the circuit further comprises at least two preheaters arranged in parallel and upstream of the respective evaporators, each said preheater being in heat transferring contact with one of said heat sources.

In order to minimize the number of separate parts and connections and provide a system that is both structurally and functionally efficient, each preheater is preferably integrated with a respective evaporator.

To illustrate the effect of the invention, the claimed ORC energy recovery system having parallel evaporators is now compared with separate conventional ORC heat recovery systems for each heat source using a single evaporator in each ORC system. When considering utilizing different waste heat streams of internal combustion engines with multiple ORC processes, the waste heat recovery system would be complicated and really expensive. If waste heat streams are utilized with one ORC process equipped with parallel preheaters and evaporators, the waste heat recovery system can be much simpler and less system components are needed. For example one condenser and one pre-feed system can be used instead of multiple condensers and pre-feed systems. This is estimated to make recovering energy from different waste heat streams of a reciprocating engine using the system of the invention less expensive compared to conventional ORC systems equipped with single evaporators.

In small scale ORC energy converters, secondary losses are larger compared to larger ORC energy converter units. Using the ORC system with parallel preheaters and evaporators will reduce these losses since there is no need for a separate turbine and other components for utilizing each waste heat stream, but only one process including the single turbine can be used for utilizing multiple waste heat streams.

Using parallel preheaters and evaporators in a common ORC system for utilizing different waste heat streams allows the ORC energy converter to be placed in a single comparatively small sized casing which allows the use of the ORC energy converter also in small spaces compared to multiple separate ORC energy converters.

In further preferred embodiments of the ORC energy recovery system according to the invention the parallel evaporators and/or the parallel preheaters may be integrated in a structure connected to the circuit and in heat transferring contact with said plurality of heat sources. By also combining the working fluid sides of the evaporators and/or preheaters so that only the heat source sides of these components are separated, further savings are obtained.

Further preferred embodiments of the ORC energy recovery system according to the invention are defined in the dependent claims.

The invention will be illustrated in the following description and in the appended drawings, in which corresponding elements are identified by reference numerals incremented by "100", and in which:
Fig. 1 illustrates the operating principle of a conventional high speed ORC energy converter,
Fig. 2 illustrates a first embodiment of an ORC energy recovery system according to the invention, having parallel evaporators for combining different heat sources to feed one ORC energy converter,
Fig. 3 illustrates a second embodiment of the ORC energy recovery system according to the invention for use with heat sources having substantially different temperatures, and
Fig. 4 illustrates a variant of the parallel evaporators in which the heat source side is separate while the working fluid side is combined.

The main components of a high speed ORC energy converter 10 as illustrated in Fig. 1 are a combined preheater and evaporator 1, a turbine 2, a condenser 6 and a feed pump 5 all connected by a circuit C for circulation of an organic working fluid. Also a recuperator 4 and a pre-feed pump 7 can be used in the ORC energy converter. The liquid organic working fluid is pressurized by the feed pump 5 to a high pressure and then enters the combined preheater and evaporator 1. The working fluid is preheated in the preheater part PH and then evaporated in the evaporator part EV by a heat source HS with which the working fluid is brought into heat transferring contact. Then the vaporized working fluid enters the turbine 2 and expands, causing the turbine 2 to rotate. Rotation of the turbine 2 is converted into electric power by a generator 3. The working fluid exiting the turbine 2 is commonly dry vapor at high temperature and the working fluid heat can be utilized in the recuperator 4 for an initial preheating of the liquid working fluid before it enters the combined preheater and evaporator 1. Low temperature vapor is then condensed in the condenser 6 and pressurized again in one or two steps. In the case of two steps, as illustrated in this embodiment, this is realized by the pre-feed pump 7 and the feed pump 5 - which may be driven by the turbine 2. The pre-feed pump might be necessary to provide the feed pump with sufficient initial pressure, and/or to provide pressure for lubrication of the bearings.

The principle of the ORC energy recovery system 110 according to the invention, with its parallel evaporators is shown in Fig. 2. The basic elements are the parallel evaporators EV-A, EV-B in a common ORC energy converter which utilize separate waste heat streams HS1, HS2 (e.g. exhaust gas heat after the primary heat recovery and charge air intercooling heat, both from an internal combustion engine). In the illustrated embodiment each of the evaporators EV-A, EV-B is combined with a respective preheater PH-A, PH-B into an integrated preheater/evaporator 101A, 101B. The ORC energy converter 110 uses a common working fluid for each preheater/evaporator 101A, 101B and the circuit C for the working fluid flow is separated into branches B1, B2 at a location 108 upstream of the parallel preheaters/evaporators after a common pre-feed or feed cycle. Also a common condenser 106 is used for the whole working fluid flow. If the working fluid pressure levels and temperature levels are the same in every preheater/evaporator 101A, 101B, a common feed pump 105 and common turbine 102 can be used in the cycle. In that case the branches B1 and B2 come together at location 109 upstream of the turbine 102. Finally, this embodiment further includes a recuperator 104 between the turbine 102 and the condenser 106.

In the illustrated embodiment a superheater SH is arranged between the first preheater/evaporator 101A and the turbine 102. This superheater SH, which uses the exhaust gas heat, can be integrated with the preheater/evaporator 101A. It serves to superheat the working fluid vapour exiting the evaporator part EV-A of the first preheater/evaporator 101A to such an extent that the mixture of working fluid vapours entering the turbine 102 from the two parallel preheaters/evaporators 101A, 101B has a sufficient amount of heat to prevent condensation in the turbine 102.

Although in the shown embodiment the evaporators EV-A, EV-B are completely separate, in some cases the working fluid sides of the parallel evaporators can be combined. In such an embodiment, which is shown in Fig. 4, only the heat source sides of the evaporators EV-A, EV-B need to be separated. The same idea could be applied to the parallel preheaters PH-A, PH-B as well. This can be achieved if the waste heat streams are guided through chambers 111A, 111B, and if the preheaters/evaporators 101A, 101B include a common conduit or tube 112 for the organic working fluid WF running through these chambers 111A, 111B. Such an embodiment can be simpler from a structural point of view.

An alternative embodiment of the ORC energy recovery system 210 according to the invention is shown in Fig. 3. This system 210 is especially suitable for use when the various heat sources HS1, HS2, HS3 have substantially different temperatures. In this case the heat source HS1 can be exhaust gas heat from an internal combustion engine, which has a relatively high temperature, while the heat sources HS2 and HS3 can be heat from an intercooler and heat from an engine coolant circuit, respectively, which have a much lower temperature. The circuit C in this embodiment has a high temperature/high pressure branch BH and a low temperature/low pressure branch BL. Only the condenser 206 and the pre-feed pump 207 are common to both branches BH, BL. The high temperature/high pressure branch BH includes a dedicated high pressure cycle feed pump 205H, a high temperature evaporator 201H, which is combined with a preheater, and a high pressure cycle turbine 202H. In similar fashion, the low temperature/low pressure branch BL includes a low pressure cycle feed pump 205L and a low pressure cycle turbine 202L. Between the feed pump 205L and the turbine 202L the low temperature/low pressure branch BL is separated at 208 into two branches BL1, BL2 leading to two parallel low temperature evaporators 201L1, 201L2, each of which is again combined with a preheater. These branches BL1, BL2 come together at 209 to lead a common vapour flow to the low pressure turbine 202L.
Although the invention has been illustrated by reference to two embodiments thereof, it will be clear that it is not limited thereto. The scope of the invention is defined solely by the appended claims.

## Claims

1. ORC energy recovery system (110;210) for recovering energy through an Organic Rankine Cycle (ORC) from a plurality of heat sources (HS1, HS2; HS1-3), comprising a circuit (C) which is arranged for circulating therein an organic working fluid, the circuit (C) including:
at least one turbine (102; 202);
at least one condenser (106; 206);
at least one pump (105, 107; 205, 207);
at least two evaporators (EV) arranged in parallel, each said evaporator (EV) being arranged to be brought into heat transferring contact with one of said heat sources (HS1, HS2; HS1-3); and
at least two preheaters (PH) arranged in parallel and upstream of the respective evaporators (EV), each said preheater (PH) being arranged to be brought into heat transferring contact with one of said heat sources (HS1, HS2; HS1-3);
**characterized in that** the at least one turbine (102; 202) is a common turbine (102; 202L) arranged downstream of the at least two parallel evaporators (EV) .

2. ORC energy recovery system (110; 210) according to claim 1, wherein each preheater (PH) is integrated with a respective evaporator (EV).

3. ORC energy recovery system (110; 210) according to claim 1 or 2, wherein each preheater (PH) has an inlet that is connected to a liquid feed line of the circuit (C) originating at the at least one pump (105, 107; 205, 207), and wherein each evaporator (EV) has an outlet that is connected to a vapour line leading to the at least one turbine (102; 202).

4. ORC energy recovery system (110; 210) according to claim 3, further comprising a superheater (SH) arranged between the outlet of at least one of the evaporators (EV) and the turbine (102; 202).

5. ORC energy recovery system (110; 210) according to claim 4, wherein the superheater (SH) is integrated with the respective evaporator (EV).

6. ORC energy recovery system (110; 210) according to any one of the preceding claims, wherein the parallel evaporators (EV) are integrated in a structure connected to the circuit (C) and arranged to be brought into heat transferring contact with said plurality of heat sources (HS1, HS2; HS1-3).

7. ORC energy recovery system (110; 210) according to any one of the preceding claims, wherein the parallel preheaters (PH) are integrated in a structure connected to the circuit (C) and arranged to be brought into heat transferring contact with said plurality of heat sources (HS1, HS2; HS1-3).

8. ORC energy recovery system (110; 210) according to any one of the preceding claims, wherein the at least one pump (105, 107; 205, 207) comprises a pre-feed pump (107; 207) and a feed pump (105; 205) arranged in series in the circuit (C).

9. ORC energy recovery system (110) according to any one of the preceding claims, wherein a recuperator (104) is arranged in the circuit (C) between the at least one turbine (102) and the at least one condenser (106), and wherein a part of the circuit (C) between the at least one pump (105, 107) and the evaporators (EV) is arranged in the recuperator (104).

10. ORC energy recovery system (210) according to any one of the preceding claims, wherein at least two of the heat sources (HS1-3) have substantially different temperatures and wherein the circuit (C) has at least two branches (BL, BH), each branch (BL, BH) including at least one evaporator (EV) and a turbine (102; 202) matched to the temperature of the heat source (HS1-3).

11. ORC energy recovery system (210) according to claim 10, wherein one (HS1) of the heat sources (HS1-3) is connected to an engine exhaust and the turbine (202) in the corresponding branch (BH) is a high-pressure turbine (202H), and wherein at least one of the other heat sources (HS2, HS3) is connected to an engine coolant circuit or a charge air intercooler and the turbine (202) in the corresponding branch (BL) is a low-pressure turbine (202L).

12. ORC energy recovery system (210) according to claim 10 or 11, wherein at least one (BL) of the branches (BL, BH) includes at least two parallel evaporators (EV) arranged to be brought into heat transferring contact with different heat sources (HS2, HS3).

13. Evaporator set of at least two parallel evaporators (EV) arranged to be brought into heat transferring contact with different ones of a plurality of heat sources (HS1, HS2; HS1-3) for use in an ORC energy recovery system (110; 210) according to any one of the preceding claims.

14. Evaporator set according to claim 13, further comprising at least two preheaters (PH) arranged in parallel and upstream of the respective evaporators (EV), each said preheater (PH) arranged to be brought into heat transferring contact with one of said heat sources (HS1, HS2; HS1-3).

## Patentansprüche

1. ORC-Energierückgewinnungssystem (110; 210) zur Energierückgewinnung durch einen organischen Rankine-Kreisprozess (ORC) aus einer Vielzahl von Wärmequellen (HS1, HS2; HS1-3), umfassend einen Kreislauf (C), der dazu angeordnet ist, darin ein organisches Arbeitsfluid zirkulieren zu lassen, wobei der Kreislauf (C) enthält:
zumindest eine Turbine (102; 202),
zumindest einen Kondensator (106; 206),
zumindest eine Pumpe (105, 107; 205, 207),
zumindest zwei parallel angeordnete Verdampfer (EV), wobei jeder Verdampfer (EV) angeordnet ist, um mit einer der Wärmequellen (HS1, HS2; HS1-3) in Wärmeübertragungskontakt gebracht zu werden,
und zumindest zwei Vorerhitzer (PH), die parallel und den jeweiligen Verdampfern (EV) vorgelagert angeordnet sind, wobei jeder Vorerhitzer (PH) angeordnet ist, um mit einer der Wärmequellen (HS1, HS2; HS1-3) in Wärmeübertragungskontakt gebracht zu werden,
**dadurch gekennzeichnet, dass** zumindest eine Turbine (102; 202) eine gemeinsame Turbine (102; 202L) ist, die den zumindest zwei parallelen Verdampfern (EV) nachgelagert angeordnet ist.

2. ORC-Energierückgewinnungssystem (110; 210) nach Anspruch 1, wobei jeder Vorerhitzer (PH) mit einem jeweiligen Verdampfer (EV) integriert ist.

3. ORC-Energierückgewinnungssystem (110; 210) nach Anspruch 1 oder 2, wobei jeder Vorerhitzer (PH) einen Einlass aufweist, der mit einer von der zumindest einen Pumpe (105, 107; 205, 207) herkommenden Flüssigkeitsspeiseleitung des Kreislaufs (C) verbunden ist, und wobei jeder Verdampfer (EV) einen Auslass aufweist, der mit einer zu der zumindest einen Turbine (102; 202) hin führenden Dampfleitung verbunden ist.

4. ORC-Energierückgewinnungssystem (110; 210) nach Anspruch 3, ferner umfassend einen Überhitzer (SH), der zwischen dem Auslass von zumindest einem von den Verdampfern (LV) und der Turbine (102; 202) angeordnet ist.

5. ORC-Energierückgewinnungssystem (110; 210) nach Anspruch 4, wobei der Überhitzer (SH) mit dem jeweiligen Verdampfer (EV) integriert ist.

6. ORC-Energierückgewinnungssystem (110; 210) nach einem der vorhergehenden Ansprüche, wobei die parallelen Verdampfer (EV) in einer mit dem Kreislauf (C) verbundenen Anordnung integriert und angeordnet sind, um mit der Vielzahl der Wärmequellen (HS1, HS2; HS1-3) in Wärmeübertragungskontakt gebracht zu werden.

7. ORC-Energierückgewinnungssystem (110; 210) nach einem der vorhergehenden Ansprüche, wobei die parallelen Vorerhitzer (PH) in einer mit dem Kreislauf (C) verbundenen Anordnung integriert und angeordnet sind, um mit der Vielzahl der Wärmequellen (HS1, HS2; HS1-3) in Wärmeübertragungskontakt gebracht zu werden.

8. ORC-Energierückgewinnungssystem (110; 210) nach einem der vorhergehenden Ansprüche, wobei die zumindest eine Pumpe (105, 107; 205, 207) eine Vorspeisungspumpe (107; 207) und eine Speisungspumpe (105; 205) umfasst, die in dem Kreislauf (C) in Reihe angeordnet sind.

9. ORC-Energierückgewinnungssystem (110) nach einem der vorhergehenden Ansprüche, wobei in dem Kreislauf (C) zwischen der zumindest einen Turbine (102) und dem zumindest einem Kondensator (106) ein Wärmetauscher (104) angeordnet ist, und wobei ein Teil des Kreislaufs (C) zwischen der zumindest einen Pumpe (105, 107) und den Verdampfern (EV) in dem Wärmetauscher (104) angeordnet ist.

10. ORC-Energierückgewinnungssystem (210) nach einem der vorhergehenden Ansprüche, wobei zumindest zwei der Wärmequellen (HS1-3) im Wesentlichen unterschiedliche Temperaturen aufweisen und wobei der Kreislauf (C) zumindest zwei Zweige (BL, BH) aufweist, wobei jeder Zweig (BL, BH) zumindest einen Verdampfer (EV) und eine Turbine (102; 202) angepasst an die Temperatur der Wärmequelle (HS1-3) enthält.

11. ORC-Energierückgewinnungssystem (210) nach Anspruch 10, wobei eine Wärmequelle (HS1) der Wärmequellen (HS1-3) mit einem Triebwerks-Abgaskanal verbunden ist und die Turbine (202) in dem entsprechenden Zweig (BH) eine Hochdruckturbine (202H) ist und wobei zumindest eine der anderen Wärmequellen (HS2, HS3) mit einem Triebwerks-Kühlmittelkreislauf oder einem Ladeluftkühler verbunden ist und die Turbine (202) in dem entsprechenden Zweig (BL) eine Niederdruckturbine (202L) ist.

12. ORC-Energierückgewinnungssystem (210) nach Anspruch 10 oder 11, wobei zumindest ein Zweig (BL) der Zweige (BL, BH) zumindest zwei parallele Verdampfer (EV) enthält, die angeordnet sind, um mit verschiedenen Wärmequellen (HS2, HS3) in Wärmeübertragungskontakt gebracht zu werden.

13. Verdampferset aus zumindest zwei parallelen Verdampfern (EV), die angeordnet sind, um mit verschiedenen Wärmequellen einer Vielzahl von Wärmequellen (HS1, HS2; HS1-3) zur Verwendung in einem ORC-Energierückgewinnungssystem (110; 210) nach einem der vorhergehenden Ansprüche in Wärmeübertragungskontakt gebracht zu werden.

14. Verdampferset nach Anspruch 13, ferner umfassend zumindest zwei Vorerhitzer (PH), die parallel und den jeweiligen Verdampfern (EV) vorgelagert angeordnet sind, wobei jeder Vorerhitzer (PH) angeordnet ist, um mit einer der Wärmequellen (HS1, HS2; HS1-3) in Wärmeübertragungskontakt gebracht zu werden.

## Revendications

1. Système de récupération d'énergie de type ORC (110 ; 210) permettant de récupérer au moyen d'un cycle de rankine organique (ORC) de l'énergie provenant d'une pluralité de sources de chaleur (HS1, HS2 ; HS1-3), comprenant un circuit (C) qui est conçu pour faire circuler en son sein un fluide de travail organique, le circuit (C) comprenant:
au moins une turbine (102 ; 202);
au moins un condenseur (106 ; 206),
au moins une pompe (105, 107 ; 205, 207),
au moins deux évaporateurs (EV) agencés en parallèle, chacun desdits évaporateurs (EV) étant conçu pour entrer en contact avec transfert de chaleur avec l'une desdites sources de chaleur (HS1, HS2 ; HS1-3); et
au moins deux préchauffeurs (PH) agencés en parallèle et en amont des évaporateurs (EV) respectifs, chacun desdits préchauffeurs (PH) étant conçu pour entrer en contact avec transfert de chaleur avec l'une desdites sources de chaleur (HS1, HS2 ; HS1-3);
**caractérisé en ce que** l'au moins une turbine (102 ; 202) est une turbine commune (102 ; 202L) agencée en aval des au moins deux évaporateurs (EV) parallèles.

2. Système de récupération d'énergie de type ORC (110 ; 210) selon la revendication 1, dans lequel chaque préchauffeur (PH) est intégré à un évaporateur (EV) respectif.

3. Système de récupération d'énergie de type ORC (110 ; 210) selon la revendication 1 ou 2, dans lequel chaque préchauffeur (PH) comporte une entrée qui est reliée à une conduite d'alimentation liquide du circuit (C) partant de l'au moins une pompe (105, 107 ; 205, 207), et dans lequel chaque évaporateur (EV) comporte une sortie qui est reliée à une conduite de vapeur menant à l'au moins une turbine (102 ; 202).

4. Système de récupération d'énergie de type ORC (110 ; 210) selon la revendication 3, comprenant en outre un surchauffeur (SH) agencé entre la sortie de l'au moins un des évaporateurs (EV) et la turbine (102 ; 202).

5. Système de récupération d'énergie de type ORC (110 ; 210) selon la revendication 4, dans lequel le surchauffeur (SH) est intégré à l'évaporateur (EV) respectif.

6. Système de récupération d'énergie de type ORC (110 ; 210) selon l'une quelconque des revendications précédentes, dans lequel les évaporateurs (EV) parallèles sont intégrés dans une structure reliée au circuit (C) et conçus pour entrer en contact avec transfert de chaleur avec ladite pluralité de sources de chaleur (HS1, HS2 ; HS1-3).

7. Système de récupération d'énergie de type ORC (110 ; 210) selon l'une quelconque des revendications précédentes, dans lequel les préchauffeurs (PH) parallèles sont intégrés dans une structure reliée au circuit (C) et conçus pour entrer en contact avec transfert de chaleur avec ladite pluralité de sources de chaleur (HS1, HS2 ; HS1-3).

8. Système de récupération d'énergie de type ORC (110 ; 210) selon l'une quelconque des revendications précédentes, dans lequel l'au moins une pompe (105, 107 ; 205, 207) comprend une pompe de pré-alimentation (107 ; 207) et une pompe d'alimentation (105 ; 205) agencées en série dans le circuit (C).

9. Système de récupération d'énergie de type ORC (110) selon l'une quelconque des revendications précédentes, dans lequel un récupérateur (104) est agencé dans le circuit (C) entre l'au moins une turbine (102) et l'au moins un condenseur (106), et dans lequel une partie du circuit (C) entre l'au moins une pompe (105, 107) et les évaporateurs (EV) est agencée dans le récupérateur (104).

10. Système de récupération d'énergie de type ORC (210) selon l'une quelconque des revendications précédentes, dans lequel au moins deux des sources de chaleur (HS1-3) ont des températures sensiblement différentes et dans lequel le circuit (C) comporte au moins deux branches (BL, BH), chaque branche (BL, BH) comprenant au moins un évaporateur (EV) et une turbine (102 ; 202) correspondant à la température de la source de chaleur (HS1-3).

11. Système de récupération d'énergie de type ORC (210) selon la revendication 10, dans lequel une (HS1) des sources de chaleur (HS1-3) est reliée au gaz d'échappement d'un moteur et la turbine (202) de la branche correspondante (BH) est une turbine à haute pression (202H), et dans lequel au moins une des autres sources de chaleur (HS2, HS3) est reliée au circuit de liquide de refroidissement d'un moteur ou à un refroidisseur intermédiaire d'air de suralimentation et la turbine (202) de la branche correspondante (BL) est une turbine à basse pression (202L).

12. Système de récupération d'énergie de type ORC (210) selon la revendication 10 ou 11, dans lequel au moins une (BL) des branches (BL, BH) comprend au moins deux évaporateurs parallèles (EV) conçus pour entrer en contact avec transfert de chaleur avec différentes sources de chaleur (HS2, HS3).

13. Ensemble d'évaporateurs d'au moins deux évaporateurs parallèles (EV) conçus pour entrer en contact avec transfert de chaleur avec différentes sources d'une pluralité de sources de chaleur (HS1, HS2 ; HS1-3) et destinés à être utilisés dans un système de récupération d'énergie de type ORC (110 ; 210) selon l'une quelconque des revendications précédentes.

14. Ensemble d'évaporateurs selon la revendication 13, comprenant en outre au moins deux préchauffeurs (PH) agencés en parallèle et en amont des évaporateurs (EV) respectifs, chacun desdits préchauffeurs (PH) étant conçu pour entrer en contact avec transfert de chaleur avec l'une desdites sources de chaleur (HS1, HS2 ; HS1-3).
